# EUROPÄISCHE PATENTSCHRIFT

(11) **EP 0 790 430 B1**
(45) Veröffentlichungstag und Bekanntmachung des Hinweises auf die Patenterteilung: **15.03.2000**
(21) Anmeldenummer: 97105798.9
(22) Anmeldetag: 11.01.1995
(51) Int. Cl.: F16D 65/56, F16D 65/16

(54) **Zuspannvorrichtung einer Scheibenbremse, insbesondere für schwere Nutzfahrzeuge**
Application device for a disc brake, especially for heavy commercial vehicles
Dispositif d'application d'un frein à disque, en particulier pour véhicules lourds

(30) Priorität: 18.01.1994 DE 9400784 U; 28.06.1994 DE 9410454 U
(43) Veröffentlichungstag der Anmeldung: 20.08.1997
(62) Teilanmeldung aus: 95906328.0
(73) Patentinhaber: Meritor Automotive, Inc., Troy, Michigan 48084 (US)
(72) Erfinder: Giering, Wilfried, 56743 Mendig (DE)
(74) Vertreter: Goetz, Rupert, Dipl.-Ing.

(56) Entgegenhaltungen:
- EP-A- 0 291 071
- WO-A-93/22579
- DE-U- 9 115 195
- GB-A- 2 150 241

## Beschreibung

Die Erfindung betrifft eine Zuspannvorrichtung einer Scheibenbremse, insbesondere für schwere Nutzfahrzeuge, mit
- mindestens einem Stößel, der in Richtung einer Stößelachse verschiebbar ist, um einen Bremsbacken an eine Bremsscheibe anzulegen,
- einem Drehkörper, der um eine Querachse drehbar ist und mindestens einen Exzenter zum Verschieben des Stößels aufweist,
- mindestens einem Stellkörper, der vom Drehkörper um eine Stellachse drehbar ist,
- einem Nachstelltrieb, der vom Stellkörper zum Ausgleichen von Belagverschleiß an den Bremsbacken antreibar ist,
- einer Rutschkupplung, zwischen dem Stellkörper und dem Nachstelltrieb und
- einem Anpreßglied zum Übertragen einer axialen Kraft, die das von der Rutschkupplung übertragbare Drehmoment bestimmt.

Eine solche Zuspannvorrichtung ist zum Beispiel aus WO-A-93/22579 bekannt.

Bei solchen Zuspannvorrichtungen sind in der Praxis gelegentlich Übernachstellungen beobachtet worden. Der Erfindung liegt deshalb die Aufgabe zugrunde, eine Zuspannvorrichtung mit Stellkörper zum Ausgleichen von Belagverschleiß in einer Scheibenbremse mit geringem Bauaufwand derart zu gestalten, daß Übernachstellungen vermieden werden.

Die Aufgabe ist gemäß der Erfindung ausgehend von einer Zuspannvorrichtung der vorstehend beschriebenen Gattung dadurch gelöst, daß der Stellkörper und das Anpreßglied teleskopartig, ohne einander zu berühren, ineinandergreifen und unabhängig voneinander gelagert sind.

Eine vorteilhafte Weiterbildung ergibt sich aus dem Anspruch 2.

Ein Ausführungsbeispiel der Erfindung wird im folgenden mit weiteren Einzelheiten anhand schematischer Zeichnungen erläutert. Es zeigen:
- Fig. 1: eine Seitenansicht einer in der Ebene I-I in Fig. 2 geschnittenen Zuspannvorrichtung,
- Fig. 2: den Längsschnitt II-II in Fig. 1,
- Fig. 3: den Querschnitt III-III in Fig. 1,

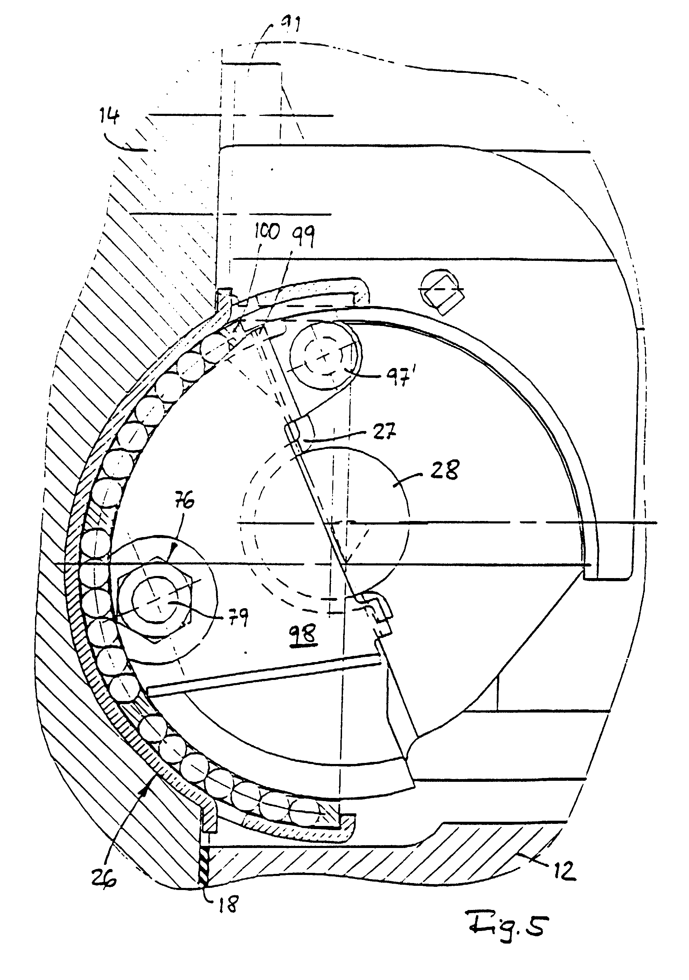

- Fig. 4: eine Teilansicht in Richtung des Pfeils IV in Fig. 3 und
- Fig. 5: einen vergrößerten Ausschnitt aus Fig. 3.

In den Zeichnungen ist eine Zuspannvorrichtung 10 einer im übrigen herkömmlich gestalteten Scheibenbremse für schwere Lastkraftwagen und Omnibusse dargestellt, die einer nicht gezeichneten, um eine Bremsscheibenachse A drehbaren Bremsscheibe zugeordnet ist. Die Zuspannvorrichtung 10 hat ein Gehäuse 12, das als Bestandteil eines im übrigen nicht gezeichneten Bremssattels ausgeführt und mit einem Gehäusedeckel 14 abgeschlossen ist. Der Gehäusedeckel 14 ist mit kräftigen Schrauben 16 am Gehäuse 12 befestigt, wobei zwischen beiden eine Dichtung 18 aus Blech angeordnet ist. Im Gehäuse 12 ist ein Drehkörper 20 angeordnet, der um eine die Bremsscheibenachse A rechtwinklig kreuzende, also zur Bremsscheibe parallele, Querachse B drehbar ist. Der Drehkörper 20 hat ein Mittelteil 22 zwischen zwei Exzentern 24, die mit je zwei zylindersektor- oder schalenförmigen Wälzlagern 26 im Gehäusedeckel 14 gelagert sind. An jedem der beiden Exzenter 24 ist mittels einer Lagerschale 27 ein Wälzkörper 28 gelagert, dessen Achse sich parallel zur Querachse B erstreckt.

Den beiden Exzentern 24 ist je einer von zwei Stößeln 30 zugeordnet, die je eine zur Bremsscheibenachse A parallele, die Querachse B rechtwinklig schneidende Stößelachse C aufweisen und symmetrisch in Bezug auf eine die Bremsscheibenachse A enthaltende, zur Querachse B normale Mittelebene der Zuspannvorrichtung 10 angeordnet sind. Die beiden Stößel 30 sind aus je einem hülsenförmigen Stößelteil 32, einem bolzenförmigen Stößelteil 34 und einer Kappe 36 zusammengesetzt. Die beiden hülsenförmigen Stößelteile 32 sind in je einer in das Gehäuse 12 eingepreßten Gleitbüchse 38 längs ihrer Stößelachse C verschiebbar und um diese drehbar gelagert und haben je ein Innengewinde, mit dem sie auf ein komplementäres Außengewinde des zugehörigen bolzenförmigen Stößelteils 34 aufgeschraubt sind. Die beiden Kappen 36 sind in das zugehörige hülsenförmige Stößelteil 32 eingepreßt und haben je eine von diesem abgewandte, zur Stößelachse C normale ebene Stirnfläche, auf welcher der zugehörige Wälzkörper 28 abwälzbar ist. Um Verschleiß selbst bei hohen Belastungen zu vermeiden, bestehen die Kappen 36 aus hochfestem Stahl und sind ebenso wie die Wälzkörper 28 gehärtet. Die Gewinde, welche die zusammengehörigen Stößelteile 32 und 34 miteiander verbinden, sind selbsthemmend, so daß Belastungen der Stößel 30 in Richtung ihrer Stößelachse C nicht im Stande sind, eine Relativdrehung der Stößelteile 32und 34 in Bezug zueinander hervorzurufen.

Die beiden hülsenförmigen Stößelteile 32 tragen je einen an ihnen befestigten Zahnkranz 40, der mit einem Zahnrad 42 kämmt; dieses ist um eine zu den Stößelachsen C parallele Achse drehbar an einer zentralen Platte 44 gelagert, die sich an den beiden Zahnkränzen 40 axial abstützt und von Rückstellfedern 46 belastet ist. Diese sind zwischen der zentralen Platte 44 und dem Gehäuse 12 derart mit Vorspannung eingebaut, daß sie die beiden Stößel 30 ständig über ihre Kappen 36 an den Wälzkörpern 28 anliegend halten. Die beiden bolzenförmigen Stößelteile 34 ragen aus den hülsenförmigen Stößelteilen 32 und den Gleitbüchsen 38 axial heraus, haben dort einen wesentlich vergößerten Durchmesser und sind durch eine Schutzplatte 48 miteinander verbunden und dadurch am Drehen gehindert.

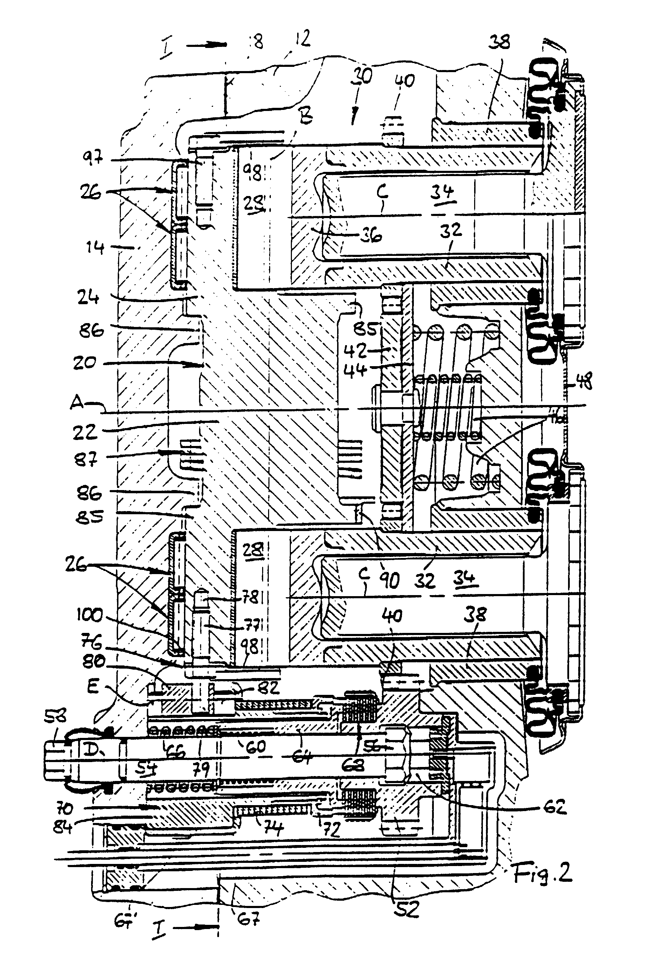

Die dargestellte Zuspannvorrichtung 10 hat ferner eine Nachstellvorrichtung 50 mit einer Stellachse D, die parallel zu den Stößelachsen C angeordnet ist. Zur Nachstellvorrrichtung 50 gehört ein Ritzel 52, das im Gehäuse 12 gelagert ist und ständig mit dem Zahnkranz 40 eines der beiden Stößel 30 kämmt. Im Ritzel 52 sowie im Gehäusedeckel 14 ist eine Rückstellwelle 54 um die Stellachse D drehbar sowie längsverschiebbar gelagert. Die Rückstellwelle 54 hat einen inneren Sechskantkopf 56 sowie einen äußeren Sechskantkopf 58. Normalerweise wird die Rückstellwelle 54 von einer Schraubenfeder 60 in der aus Fig. 2 ersichtlichen Stellung gehalten, in welcher der innere Sechskantkopf 56 in einem Hohlraum des Ritzels 52 so aufgenommen ist, daß das Ritzel 52 unbeeinflußt von der Rückstellwelle 54 drehbar ist. Mit einem am äußeren Sechskantkopf 58 angreifenden Werkzeug, beispielsweise Steckschlüssel, läßt sich die Rückstellwelle 54 längs der Stellachse D gegen den Widerstand der Schraubenfeder 60 derart verschieben, daß der innere Sechskantkopf 56 in einen Innensechskant 62 des Ritzels 52 eingreift. Auf diese Weise kann das Ritzel 52 gedreht werden, um die beiden hülsenförmigen Stößelteile 32 in ihre abgebildete Ausgangsstellung zu drehen, in der die beiden Stößel 30 ihre geringstmögliche Länge haben, was für den Austausch verschlissener Bremsbacken gegen neue erforderlich ist.

Auf der Rückstellwelle 54 ist ein von einer inneren Büchse gebildetes Anpreßglied 64 gelagert, das durch eine am Gehäusedeckel 14 abgestützte Schraubenfeder 66 in Richtung auf eine als Lamellenkupplung ausgebildete Rutschkupplung 68 vorgespannt ist und deren Lamellen gegeneinander drückt. Im Gehäusedeckel 14 ist eine Lagerhülse 67 mittels einer an ihr ausgebildeten federnden Nase 67' so eingerastet, daß sie gegen Drehen und axiales Verschieben gesichert ist. In der Lagerhülse 67 ist ein büchsenförmiger Stellkörper 70 drehbar, jedoch axial unverschiebbar gelagert. Der Stellkörper 70 umschließt das Anpreßglied 64, berührt es jedoch nicht, so daß kein Drehmoment unmittelbar vom Stellkörper 70 auf das Anpreßglied 64 übertragen werden kann. Auf dem Stellkörper 70 ist eine äußere Büchse 72 gelagert. Der Stellkörper 70 ist mit der äußeren Büchse 72 durch eine Schlingfeder 74 verbunden, die eine Freilaufkupplung bildet, so daß der Stellkörper 70 die äußere Büchse 72 bei Drehung nur in einer Richtung mitnimmt. Die äußere Büchse 72 ist mit jeder zweiten Lamelle der Lamellenkupplung 68 zu gemeinsamer Drehung verbunden, während die übrigen Lamellen mit dem Ritzel 52 verbunden sind. Die Lamellenkupplung ist somit im Stande, ein begrenztes, von der Vorspannung der Schraubenfeder 66 abhängiges, Drehmoment von der äußeren Büchse 72 auf das Ritzel 52 zu übertragen.

Der Drehkörper 20 ist mit dem Stellkörper 70 durch einen Winkeltrieb verbunden, der im folgenden beschrieben wird:

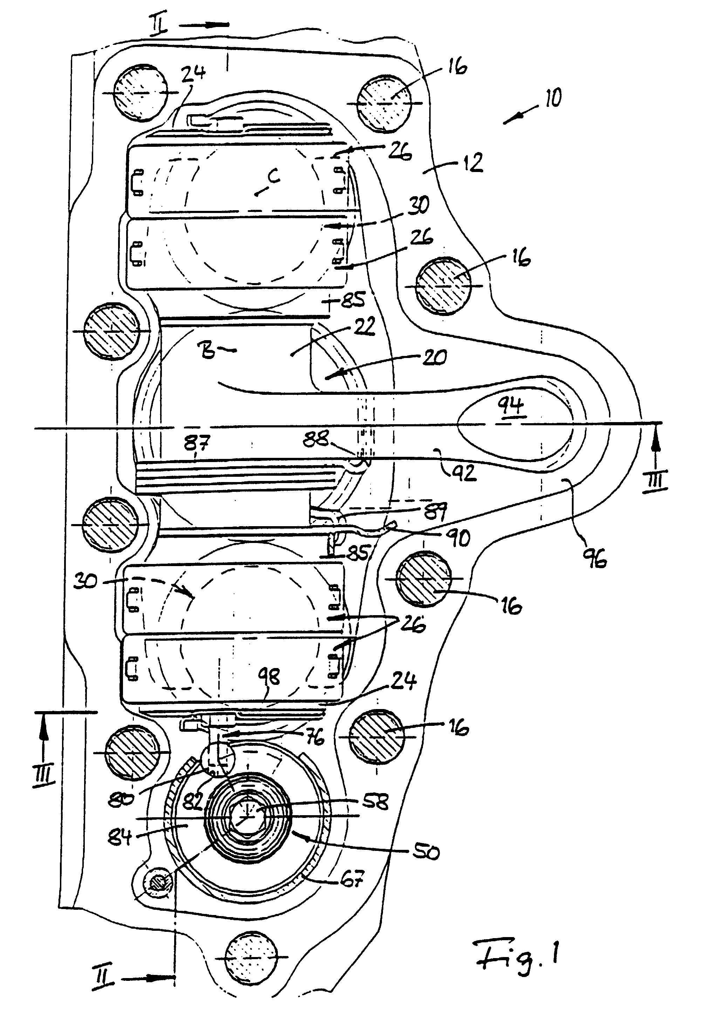

Am Drehkörper 20 ist ein zur Querachse B paralleler Stift 76 befestigt. Dieser hat hat einen Gewindeabschnitt 77, der in eine parallel zur Querachse B in einem Abstand von dieser angeordnete Gewindebohrung 78 des Drehkörpers 20 eingeschraubt ist, und einen aus dieser Bohrung herausragenden zylindrischen Abschnitt 79. Auf dem zylindrischen Abschnitt 79 ist ein Gleitstein 80 gelagert, der beispielsweise aus Sinterbronze oder einem anderen selbstschmierenden Material besteht und die äußere Form eines zum Stift 76 normalen Zylinders hat. Dieser Zylinder erscheint in Fig. 1 als Kreis, während er in Fig. 2 als Rechteck erscheint. Der Gleitstein 80 ist in einer zu seiner äußeren Zylinderform komplementären, also im Profil annähernd kreisbogenförmigen Aussparung 82 geführt, deren Achse E sich parallel zur Stellachse D der Nachstellvorrichtung 50 erstreckt. Die Aussparung 82 ist in einen Flansch 84 des Stellkörpers 70 derart eingebohrt oder eingefräst, daß sie auf ihrer gesamten Länge zur äußeren Mantelfläche des Flansches 84 hin offen ist, um für den Stift 76 Platz zu lassen.

Der Drehkörper 20 hat zwischen seinem Mittelteil 22 und seinen beiden Exzentern 24 je einen Bund 85, der an einem Vorsprung 86 des Gehäusedeckels 14 axial abgestützt ist. Rings um den Mittelteil 22 ist eine wendelförmige Rückstellfeder 87 angeordnet, die in zwei Schenkeln 88 und 89 endet. Der Schenkel 89 ist an einem Halteblech 90 festgehakt, das an einem der beiden Bunde 85 anliegt und mittels Schrauben 91 an dem Gehäusedeckel 14 befestigt ist. Der andere Schenkel 88 ist an einem Betätigungshebel 92 festgehakt, der mit dem Drehkörper 20 einstückig ausgebildet ist. Der Betätigungshebel 92 hat eine Pfanne 94, in die ein Stößel eines pneumatischen Betätigungszylinders eingreifen kann. Der Betätigungszylinder und sein Stößel sind von üblicher Bauart und deshalb nicht dargestellt; zum Hindurchführen des Stößels ist am Gehäusedeckel 14 ein rüsselförmiger Fortsatz 96 ausgebildet.

An den beiden Enden des Drehkörpers 20, also an je einer Stirnseite seiner beiden Exzenter 24, ist mit dem Stift 76 bzw. mit einer normalen Maschinenschraube 97 je eine Halterung 98 befestigt, die im dargestellten Beispiel ein Stanzteil aus Blech ist. Jede der Halterungen 98 hat die Aufgabe, den an dem betreffenden Exenter 24 gelagerten Wälzkörper 28 an einer Verschiebung in Richtung der Querachse B nach außen zu hindern. Gegen eine Verschiebung axial nach innen, also zur Mittelebene der Zuspannvorrichtung 10 hin, sind die Wälzkörper 28 durch das Mittelteil 22 des Drehkörpers 20 gehindert.

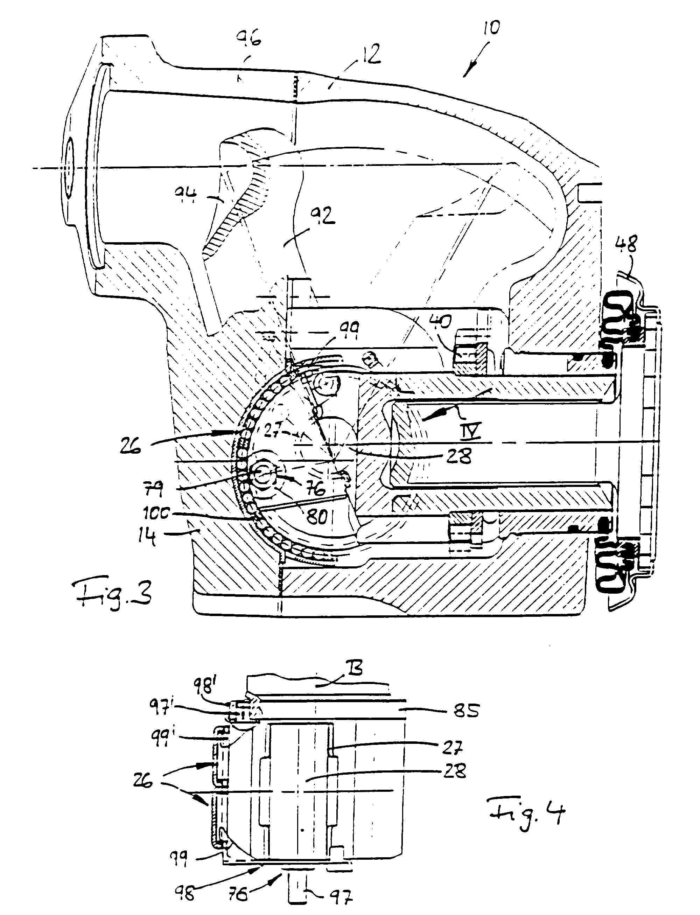

Die beiden Lagerschalen 27 sind in gleicher Weise durch je eine der beiden Halterungen 98 sowie durch das Mitteilteil 22 des Drehkörpers 20 gegen axiales Verschieben gesichert. Jede der beiden Halterungen 98 wirkt außerdem mit dem benachbarten Wälzlager 26 derart zusammen, daß dessen Wälzkörper, im dargestellten Beispiel sind es Nadeln, jeweils in ihre aus Fig. 3 und 5 ersichtliche Ausgangsstellung gedrängt werden, wenn der Betätigungshebel 92 nach einer Bremsbetätigung in seine Ruhestellung zurückkehrt. Zu diesem Zweck hat jede der Halterungen 98 einen Vorsprung 99, der in das benachbarte Wälzlager 26 eingreift und als Mitnehmer für einen Käfig 100 wirkt, in dem die Wälzkörper gehalten sind.

Da im dargestellten Beispiel jeder der beiden Exenter 24 durch zwei in axialer Richtung nebeneinander angeordnete Wälzlager 26 am Gehäusedeckel 24 abgestützt ist, und die beiden Halterungen 98 nur mit dem jeweils unmittelbar benachbarten, äußeren dieser Wälzlager zusammenwirken, ist am axial inneren, dem Mittelteil 22 benachbarten Ende jedes Exenters 24 eine zusätzliche Halterung 98' befestigt, die mit einem an ihr ausgebildeten Vorsprung 99' in das ihr benachbarte Wälzlager 26 eingreift, so daß auch dessen Käfig 100 nach jeder Bremsbetätigung gezwungen ist, in seine Ruhestellung zurückzukehren.

Die beiden Halterungen 98' sind im dargestellten Beispiel mit Kerbnägeln 97' am zugehörigen Bund 85 befestigt.

Wenn der Drehkörper 20, ausgehend von seiner in den Zeichnungen abgebildeten Ruhestellung, um die Querachse B im Uhrzeigersinn gemäß Fig. 3 gedreht wird, drücken die auf seinen beiden Exentern 24 gelagerten Wälzkörper 28 die beiden Stößel 30 gemäß Fig. 3 nach rechts, wodurch die an den bolzenförmigen Stößelteilen 34 abgestüzten, nicht dargestellten Bremsbacken an die zugehörige Bremsscheibe angelegt werden. Gleichzeitig bewirkt der beschriebene, von dem Stift 76, dem Gleitstein 80 und der Aussparung 82 des Stellkörpers 70 gebildete Winkeltrieb, daß die Drehung des Drehkörpers 20 in eine Drehung des Stellkörpers 70 um die Stellachse D umgesetzt wird. Diese Drehung wird von der Schlingfeder 74 auf die äußere Büchse 72 übertragen. Wenn das Bremslüftspiel, das beim Anlegen der Bremsbacken überwunden werden muß, infolge Verschleißes der Bremsbeläge einen bestimmten Betrag überschritten hat, genügt das Drehmoment, das die Lamellenkupplung 68 von der äußeren Büchse 72 auf das Ritzel 52 zu übertragen vermag, um eine Drehung der hülsenförmigen Stößelteile 32 zu bewirken, wodurch die Gesamtlänge jeder der beiden Stößel 30 vergrößert, also eine Nachstellung bewirkt wird.

Das von der Lamellenkupplung 68 übertragbare Drehmoment ist auch maßgebend für die Belastung des Gleitsteins 80 und der ihn führenden Ausnehmung 82. Da beide einander eng angepaßte, nahezu vollständig zylindrische Formen haben, berühren sie sich gegenseitig auf einer verhältnismäßig großen Zylinderfläche,so daß die zwischen ihnen auftretende Flächenpressung selbst dann gering ist, wenn die Lamellenkupplung 68 so eingestellt ist, daß sie ein verhältnismäßig großes Drehmoment übertragen kann, um Reibungswiderstände in den miteiander in Eingriff stehenden Gewinden der Stößelteile 32 und 34 mit Sicherheit überwinden zu können.

## Patentansprüche

1. Zuspannvorrichtung einer Scheibenbremse, insbesondere für schwere Nutzfahrzeuge, mit
- mindestens einem Stößel (30), der in Richtung einer Stößelachse (C) verschiebbar ist, um einen Bremsbacken an eine Bremsscheibe anzulegen,
- einem Drehkörper (20), der um eine Querachse (B) drehbar ist und mindestens einen Exzenter (24) zum Verschieben des Stößels (30) aufweist,
- mindestens einem Stellkörper (70), der vom Drehkörper (20) um eine Stellachse (D) drehbar ist,
- einem Nachstelltrieb (40,52), der vom Stellkörper (70) zum Ausgleichen von Belagverschleiß an den Bremsbacken antreibbar ist,
- einer Rutschkupplung (68) zwischen dem Stellkörper (70) und dem Nachstelltrieb (40,52) und
- einem Anpreßglied (64) zum Übertragen einer axialen Kraft, die das von der Rutschkupplung (68) übertragbare Drehmoment bestimmt,
dadurch gekennzeichnet, daß
der Stellkörper (70) und das Anpreßglied (64) teleskopartig, ohne einander zu berühren ineinandergreifen und unabhängig voneinander gelagert sind.

2. Zuspannvorrichtung nach Anspruch 1,
dadurch gekennzeichnet, daß
der Stellkörper (70) an einem Gehäuseteil (14) gelagert ist und das Anpreßglied (64) auf einer in dem selben Gehäuseteil (14) gelagerten Rückstellwelle (54) zum Rückstellen des Nachstellgetriebes (40,52) gelagert ist.

## Claims

1. A clamping device of a disc brake, especially for use with heavy commercial vehicles, comprising
- at least one plunger (30) which is displaceable in the direction of a plunger axis (C) for applying a brake pad to a brake disc,
- a rotary member (20) which is rotatable about a transverse axis (B) and includes at least one eccentric (24) for displacing the plunger (30),
- at least one adjusting member (70) adapted to be rotated by the rotary member (20) about an adjusting axis (D),
- an adjusting drive (40, 52) which is adapted to be driven by the adjusting member (70) to compensate for lining wear at the brake pads,
- a sliding clutch (68) arranged between the adjusting member (70) and the adjusting drive (40, 52), and
- a pressure member (64) for transmitting an axial force determining the torque which can be transmitted by the sliding clutch (68),
**characterized** in that
the adjusting member (70) and the pressure member (64) engage telescopically without contacting each other and are supported independently of each other.

2. The clamping device as claimed in claim 1,
**characterized** in that
the adjusting member (70) is carried on a housing part (14) and the pressure member (64) is carried on a reset shaft (54) supported in said same housing part (14) for resetting the adjusting drive (40, 52).

## Revendications

1. Dispositif d'application d'un frein à disque, en particulier pour véhicules utilitaires lourds, comprenant
- au moins un poussoir (30) qui peut coulisser dans la direction d'un axe de poussoir (C) pour appliquer un segment de frein à un disque de frein,
- un corps tournant (20) qui peut tourner autour d'un axe transversal (B) et présente au moins un excentrique (24) pour faire coulisser le poussoir (30), et
- au moins un corps de réglage (70) que le corps tournant (20) peut faire tourner autour d'un axe de réglage (D),
- un dispositif de correction (40, 52) qui peut être mû par le corps de réglage (70) pour compenser l'usure de la garniture aux segments de frein,
- un accouplement à friction (68) entre le corps de réglage (70) et le dispositif de correction (40, 52) et
- un organe de pression (64) servant à transmettre une force axiale qui détermine le couple de rotation pouvant être transmis par l'accouplement à friction (68),
caractérisé en ce que
le corps de réglage (70) et l'organe de pression (64) s'emmanchent de façon télescopique sans contact mutuel et sont montés sur paliers indépendamment l'un de l'autre.

2. Dispositif d'application selon la revendication 1,
caractérisé en ce que
le corps de réglage (70) est monté sur palier sur une partie de boîtier (14) et l'organe de pression (64) est monté sur palier sur un arbre de rappel (64) monté sur palier dans la même partie de boîtier (14) et servant à rappeler le dispositif de correction (40, 52).
